# EUROPEAN PATENT SPECIFICATION

(11) **EP 2 172 667 B1**
(45) Date of publication and mention of the grant of the patent: **23.05.2012**
(21) Application number: 09012344.9
(22) Date of filing: 29.09.2009
(51) Int. Cl.: F16D 25/08, F16J 15/32

(54) **Cup seal**
Topfdichtung
Joint calotte

(30) Priority: 01.10.2008 JP 2008256578
(43) Date of publication of application: 07.04.2010
(73) Proprietor: Aisin Seiki Kabushiki Kaisha, Aichi-ken 448-8650 (JP)
(72) Inventor: Nakamura, Toshiyuki c/o IP Group, Kariya-shi, Aichi-ken, 448-8605 (JP); Hattori, Yasuaki c/o Intellectual Property Department, Kariya-shi, Aichi-ken, 448-8650 (JP)
(74) Representative: Kramer - Barske - Schmidtchen

(56) References cited:
- EP-A- 1 970 589
- DE-A1-102007 035 276
- DE-C1- 19 681 324
- JP-A- 2002 340 028

## Description

### FIELD OF THE INVENTION

The present invention relates to a cup seal which is applied to a hydraulic clutch release device.

### BACKGROUND

A known cup seal applied to a hydraulic clutch release device which is mounted on a vehicle is disclosed in US 6076645 and DE19681324C1 (hereinafter referred to as References 1 and 2) and in JP 2002-340028 A.
JP 2002-340028 A provides a hydraulic clutch release device which is capable of preventing air from remaining between a seal member and a piston member in assembling, and easily assembling the seal member. In this respect, JP 2002-340028 A shows an annular piston member which is provided with a seal member at its end part and which is axially slidably fitted in an annular cylinder of the hydraulic clutch release device. An end part of the piston member is provided with an annular recessed groove, the seal member is provided with a projecting part corresponding to the annular recessed groove to be fitted into the annular recessed groove and further the annular recessed groove is provided with an air hole communicated to the outside as an air escape part. The annular recessed groove is a dovetail annular groove, and the projecting part of the seal member is an inverted taper-shaped projecting part.

According to the cup seal disclosed in Reference 1 or 2, an inner peripheral surface pressure generated between an inner peripheral surface of the cup seal and an inner cylindrical surface of a cylinder, and an outer peripheral surface pressure generated between an outer peripheral surface of the cup seal and an outer cylindrical surface of the cylinder are not uniformly secured. Thus, the cup seal may excessively interfere with the piston and the cylinder because the cup seal falls widely to an axial direction when the piston is operated or a negative pressure is applied to the cup seal.

A need thus exists for a cup seal in which an inner peripheral surface pressure generated between an inner peripheral surface of the cup seal and an inner cylindrical surface of a cylinder, and an outer peripheral surface pressure generated between an outer peripheral surface of the cup seal and an outer cylindrical surface of the cylinder are uniformly secured.

### SUMMARY OF THE INVENTION

According to an aspect of the present invention, a cup seal is connectable to an end portion of a piston which has an annular shape and which is slidably movable within a cylinder chamber, the cup seal being slidable relative to an inner cylindrical surface and an outer cylindrical surface of the cylinder chamber when the piston slidably moves within the cylinder chamber, the cup seal having an annular shape and elasticity, includes a base portion, a neck portion formed at one axial end of the base portion, first and second shoulder portions formed at the base portion and positioned at both sides of the neck portion in a radial direction, a head portion formed at one axial end of the neck portion and engaging with the piston, and first and second lip portions formed at both radial ends of the base portion and being slidable relative to the inner cylindrical surface and the outer cylindrical surface of the cylinder chamber respectively. The base portion includes first and second recesses formed between the neck portion and the first and second shoulder portions respectively around the neck portion. The first and second recesses are adapted for making contact with an end surface formed around an annular groove which is formed at an end portion of the piston and with which the head portion engages.

According to the aforementioned invention, a contact state between the cup seal and the piston is stabilized by means of the first and second recesses. Therefore, uniformity of an inner peripheral surface pressure generated between an inner peripheral surface of the cup seal and the inner cylindrical surface of the cylinder, and an outer peripheral surface pressure generated between an outer peripheral surface of the cup seal and an outer cylindrical surface of the cylinder is sufficiently ensured. An end portion of the cup seal makes close contact with an end portion of the piston by means of the first and second recesses. Consequently, oil leakage from between the cup seal and the piston is prevented.

In addition, the based portion, the neck portion, and the head portion each have an axially symmetrical shape. The first and second lip portions have the same thickness. Further, the first and second lip portions include first and second dents which are formed around the first and second shoulder portions respectively and which are slidable relative to the inner cylindrical surface and the outer cylindrical surface of the cylinder chamber.

According to the aforementioned invention, a contact state between the cup seal and the inner and outer cylindrical surfaces of the cylinder chamber is stabilized by means of the first and second dents. Therefore, the uniformity of the inner peripheral surface pressure generated between the inner peripheral surface of the cup seal and the inner cylindrical surface of the cylinder, and the outer peripheral surface pressure generated between the outer peripheral surface of the cup seal and the outer cylindrical surface of the cylinder is sufficiently ensured. The first and second lip portions of the cup seal make close contact with the inner cylindrical surface and the outer cylindrical surface of the cylinder chamber, respectively, by means of the first and second dents. Consequently, oil leakage from between the cup seal and the inner and outer cylindrical surfaces of the cylinder chamber is prevented.

When defining A: an inner diameter of the cup seal, B: an outer diameter of the inner cylindrical surface of the cylinder chamber, C: a cup width corresponding to a radial distance between an inner cylindrical surface and an outer cylindrical surface of the first and second lip portions respectively, D: a cylinder width corresponding to a distance between the inner cylindrical surface and the outer cylindrical surface of the cylinder chamber, E: a total axial length of the head portion and the neck portion, and, F: a radial width of the neck portion, A/B is equal to or smaller than 0.95, C/D is equal to or greater than 1.30, and E/F is equal to or smaller than 1.5.

The shape of the cup seal is defined in the aforementioned manner so that the uniformity of the inner peripheral surface pressure generated between the inner peripheral surface of the cup seal and the inner cylindrical surface of the cylinder, and the outer peripheral surface pressure generated between the outer peripheral surface of the cup seal and the outer cylindrical surface of the cylinder is sufficiently ensured. Thus, in a case where the piston is operated or the negative pressure is applied to the cup seal, the cup seal is prevented from inclining in the axial direction, thereby improving the durability of the cup seal.

A/B is in a range from 0.7 to 0.95, C/D is in a range from 1.30 to 1.6, and E/F is in a range from 1.2 to 1.5.

Specifications of the cup seal are determined as mentioned above so that the uniformity of the inner peripheral surface pressure generated between the inner peripheral surface of the cup seal and the inner cylindrical surface of the cylinder, and the outer peripheral surface pressure generated between the outer peripheral surface of the cup seal and the outer cylindrical surface of the cylinder are highly ensured. A/B is specified to be equal to or smaller than 0.95 so that a contact surface pressure at an inner side of the cup seal is stabilized. Specifically, the cup seal needs a certain size in a radial direction and thus A/B is desirably equal to or greater than 0.7. C/D is specified to be equal to or greater than 1.30 so that the contact surface pressure of the cup seal is sufficiently assured. In order to prevent the cup seal from being excessively compressed, C/D is desirably equal to or smaller than 1.6. E/F is specified to be equal to or smaller than 1.5 so that buckling of the head portion is prevented. In order to assure a length of the engagement between the cup seal and the piston in the axial direction, the head portion needs a certain length in the axial direction and thus E/F is desirably equal to or greater than 1.2.

When defining G: an axial length of a portion of each of the first and second lip portions radially and axially inclined, and H: an axial length of the base portion, G/H is equal to or smaller than 1.

Accordingly, the first and second lip portions are prevented from excessively bending.

An inner peripheral surface and an outer peripheral surface of end portions of the first and second lip portions respectively form first and second straight portions which axially extend in a non-assembled state.

Because the first and second straight portions are provided, the cup seal is easily removed from a molding die, which enhances a dimensional accuracy of the cup seal.

When defining I: a curvature of a portion connecting each of the straight portions and the portion of each of the first and second lip portions radially and axially inclined, I is equal to or smaller than 1.

Accordingly, peripheral surfaces of the first and second lip portions, and the inner and outer cylindrical surfaces of the cylinder chamber easily make close contact with each other, which contributes to the uniformity of the inner peripheral surface pressure and the outer peripheral surface pressure.

The first and second lip portions include the first and second shoulder portions respectively around the head portion, and the first and second shoulder portions axially extend towards the head portion relative to the base portion.

### BRIEF DESCRIPTION OF THE DRAWINGS

The foregoing and additional features and characteristics of the present invention will become more apparent from the following detailed description considered with the reference to the accompanying drawings, wherein:

Fig. 1 schematically illustrates a structure of a cup seal in a cross sectional view according to an embodiment, which is applied to a hydraulic clutch release device;

Fig. 2 is an exploded view of the structure of the cup seal in a cross section according to the embodiment;

Fig. 3 is a cross sectional view of the cup seal and a piston shown in Fig. 2 in an assembled condition;

Fig. 4 is a cross sectional view of the cup seal and the piston taken along the line IV- IV of Fig. 3;

Fig. 5 is a specification view of the cup seal according to the embodiment;

Fig. 6 is a distribution chart of measured contact surface pressures of lip portions of the cup seal according to the embodiment in the assembling state;

Fig. 7 is a distribution chart of measured contact surface pressures of the lip portions of the cup seal according to the embodiment when a load is applied to the cup seal; and

Fig. 8 is a comparison chart of measured contact surface pressures of an inner lip portion and an outer lip portion of the cup seal shown in Fig. 6 while the pressure in a cylinder chamber is changed.

### DETAILED DESCRIPTION

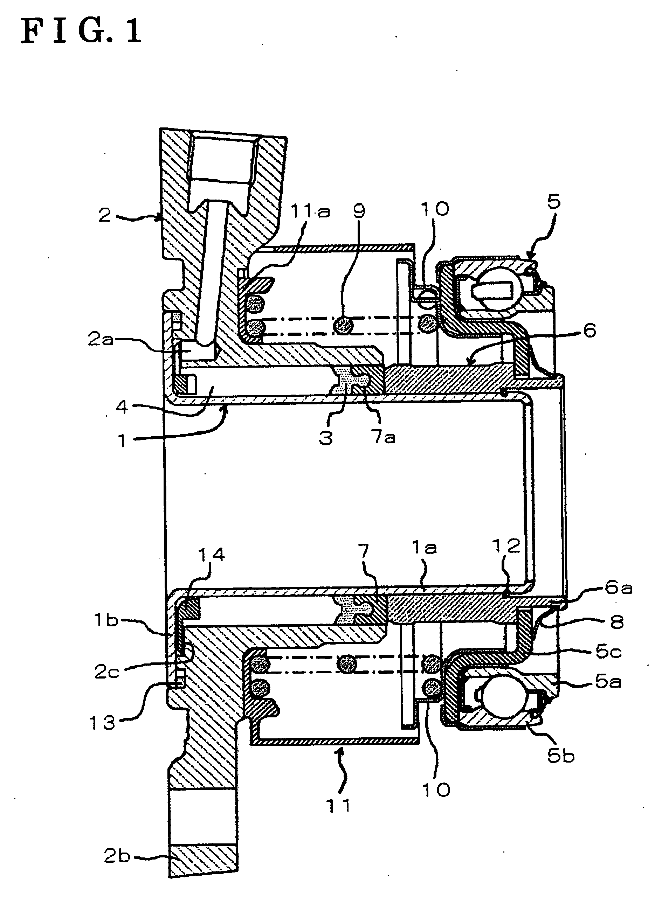

An embodiment will be explained with reference to the attached drawings. Fig. 1 schematically shows a structure of a hydraulic clutch release device in a cross sectional view. A cup seal according to the embodiment is applied to the hydraulic clutch release device.

Referring to Fig. 1, the hydraulic clutch release device where the cup seal is provided includes an inner housing 1, an outer housing 2, a cylinder chamber 4, first and second annular pistons 6, 7, and a release bearing 5. The cylinder chamber 4 is formed between the inner housing 1 and the outer housing 2. The first and second annular pistons 6, 7 and the release bearing 5 are movable in an axial direction by means of hydraulic pressure generated in the cylinder chamber 4. The hydraulic clutch release device controls the engagement and disengagement of a clutch by the axial movement of the first and second annular pistons 6, 7 and the release bearing 5.

The hydraulic clutch release device further includes a cup seal 3, a dish spring 8, a coil spring 9, a seal member 10, a cover member 11, a stopper ring 12, a seal 13 and a stopper member 14.

The inner housing 1 is formed in an annular shape and includes a cylindrical portion 1a and a flange portion 1b. The flange portion 1b circumferentially extends from an open end of the cylindrical portion 1a.

The outer housing 2 is formed in an annular shape and includes an oil port 2a, a mounting flange 2b and a stepped portion 2c. The mounting flange 2b is used for mounting the hydraulic clutch release device on a transmission or the like. The stepped portion 2c is formed in a concave shape at a surface of the outer housing 2 facing the flange portion 1b and is formed in an annular shape at an outer peripheral side of the cylinder chamber 4.

The cup seal 3 is made of an elastic material and has an annular shape for sealing the cylinder chamber 4. The cup seal 3 is arranged between the inner housing 1 and the outer housing 2 and is engaged with an annular groove 7a that is formed at the second annular piston 7.

The cylinder chamber 4 has an annular shape and is defined by an outer surface of the inner housing 1, an inner surface of the outer housing 2 and the second annular piston 7. The cylinder chamber 4 is hydraulically connected to a clutch master cylinder via an oil passage which is defined by the stepped portion 2c, the flange portion 1b, and the oil port 2a. The oil is supplied to the cylinder chamber 4 from the clutch master cylinder.

The release bearing 5 is a ball bearing type and is mounted on a retaining member 5c. An inner ring 5a of the release bearing 5 is rotatably supported by an outer ring 5b via a ball. Further, the release bearing 5 normally connects with a diaphragm spring at an end portion facing the clutch (right side of Fig. 1). Therefore, the inner ring 5a integrally rotates with the diaphragm spring. The outer ring 5b is a non-rotating ring and is secured to the first annular piston 6 via the retaining member 5c. The retaining member 5c of the release bearing 5 is centrally adjustably mounted on a mounting portion 6a of the first annular piston 6 by the dish spring 8. The biasing force of the coil spring 9 is applied to the retaining member 5c at the surface facing the coil spring 9, via the seal member 10. The release bearing 5 is centrally adjustably supported in a radial direction by the dish spring 8.

A clutch disc (not shown) is pressed upon a flywheel (not shown) via a pressure plate (not shown) by means of the diaphragm spring.

The first annular piston 6 detachably contacts with the second annular piston 7 at an end portion facing the cylinder chamber 4. The first annular piston 6 is slidable in an axial direction (longitudinal direction in Fig. 1), between the inner housing 1 and the outer housing 2 in response to the sliding movement of the first annular piston 7.

The second annular piston 7 is slidable in the axial direction (longitudinal direction in Fig. 1) by means of the oil pressure generated between the inner housing 1 and the second housing 2. The second annular piston 7 includes the annular groove (concave portion) 7a at an end portion facing the cylinder chamber 4 for accommodating the cup seal 3.

The dish spring 8 includes an annular member which has spring elasticity. The retaining member 5c of the release bearing 5 is mounted on the mounting portion 6a of the first piston 6 with the spring elasticity of the dish spring 8.

The coil spring 9 extends in the axial direction of the hydraulic clutch release device (longitudinal direction in Fig. 1) and is disposed between the seat member 10 and a seat portion 1 1a of the cover member 11. The coil spring 9 biases the release bearing 5 towards the diaphragm spring via the seat member 10.

The seat member 10 supports one end of the coil spring 9 and is mounted on the retaining member 5c of the release bearing 5.

The cover member 11 is formed into a cylindrical shape and covers an outer peripheral surface of the coil spring 9. The cover member 11 is designed not to be in contact with the release bearing 5, even when the first and second pistons 6, 7 slide towards the cylinder chamber 4. The cover member 11 includes the seat portion 11a extending radially inwardly at an end portion facing the transmission (left side of Fig. 1). The seat portion 11a supports the other end of the coil spring 9 and contacts with the outer housing 2.

The stopper ring 12 is formed into an annular shape and restricts sliding of the annular pistons 6, 7 toward the clutch (right side of Fig. 1). The stopper ring 12 is attached into a groove formed in the vicinity of an end portion of an outer peripheral surface of the inner housing 1 facing the clutch.

The seal 13 is formed into an annular shape and is made of an elastic material for sealing a contact surface of the flange portion 1b of the inner housing 1 and the outer housing 2. The seal 13 is provided further outward of the cylinder chamber 4 and the oil port 2a.

The stopper member 14 is an annular member which regulates sliding of the cup seal 3 to the transmission (left side of Fig. 1). The stopper member 14 protects the cup seal 3 not to be damaged in a case where the cup seal 3 is positioned at an oil passage between the stepped portion 2c and the flange portion 1b. Such case occurs when the pistons 6 and 7 are completely separated to block the axial direct vibration transmitted from the crankshaft over the engine to a hydraulic system. The stopper member 14 is rotatably provided at the outer peripheral surface of the cylindrical portion 1a of the inner housing 1 and at the oil passage which is located between the stepped portion 2c and the flange portion 1b.

The basic operation of the hydraulic clutch release device as described above will be explained. When an operator steps on a clutch pedal, the oil is supplied to the cylinder chamber 4 from the clutch master cylinder. Then; the first and second pistons 6, 7 and the release bearing 5 move towards the clutch due to the oil pressure so as to disengage the clutch.

When the operator releases the clutch pedal, the oil in the cylinder chamber 4 is discharged from the oil port 2a. Then, the first and second pistons 6, 7 and the release bearing 5 move towards the cylinder chamber 4 by the discharge of the oil so as to engage the clutch.

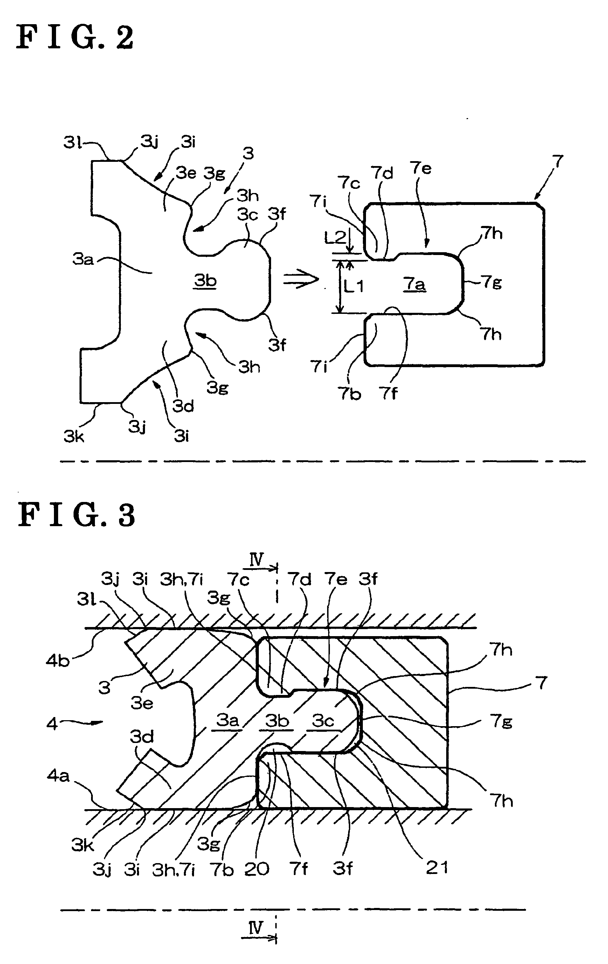

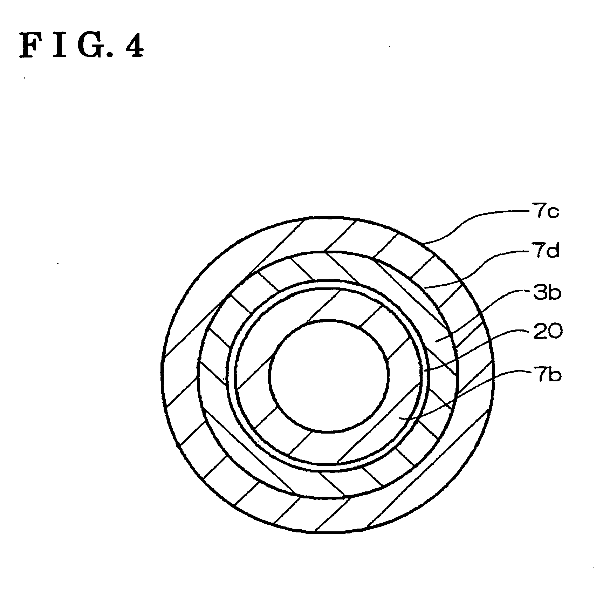

Next, the assembling structure of the cup seal according to the embodiment will be explained. Fig. 2 is an exploded view of the structure of the cup seal 3 in a cross section according to the embodiment. Fig. 3 is a cross sectional view of the cup seal 3 and the piston 7 shown in Fig. 2, but showing in an assembled condition. Fig. 4 is a cross sectional view of the cup seal 3 and the piston 7 taken along the line IV- IV of Fig. 3. A center line shown in Fig. 2 and the like is provided only for showing that the cup seal 3 is formed in an annular shape but not corresponding to the size of the cup seal shown in Fig. 1.

Referring to Fig. 2 and Fig. 3, according to the assembling structure of the cup seal of the embodiment, the cup seal 3 is engaged with an end portion of the second annular piston 7 (hereinafter simply referred to as the piston 7). The piston 7 is slidably movable within the annular shaped cylinder chamber 4. The cup seal 3 has an annular shape and is made of an elastic material. When the piston 7 moves, the cup seal 3 slides on an inner cylinder surface 4a and an outer cylinder surface 4b of the cylinder chamber 4. The cup seal 3 fluidly seals the piston 7 and the inner and outer cylinder surfaces 4a and 4b of the cylinder chamber 4.

The cup seal 3 includes a base portion 3a, a neck portion 3b, a head portion 3c, first and second lip portions 3d, 3e, and first and second shoulder portions 3g, 3g. The neck portion 3b is provided at the base portion 3a at one end in the axial direction. The head portion 3c is provided at the neck portion 3b at one end in the axial direction and has a diameter larger than that of the neck portion 3b. The head portion 3c is inserted into or engaged with the piston 7. The first and second lip portions 3d, 3e are provided at the base portion 3a at the other end in the axial direction and at both radial ends. The first and second lip portions 3d, 3e are slidably in contact with the inner cylinder surface 4a and the outer cylinder surface 4b, respectively. The first and second shoulder portions 3g, 3g are provided at the base portion 3a and are positioned at both sides of the neck portion 3b in a radial direction. The base portion 3a, the neck portion 3b and the head portion 3c are formed symmetrically with respect to an axial line. The thicknesses of the first and second lip portions 3d, 3e are substantially the same.

The base portion 3a includes first and second recesses 3h, 3h provided between the neck portion 3b and the shoulder portions 3g, 3g, respectively. The first and second recesses 3h, 3h are in contact with end surfaces 7i, 7i formed at the circumferential side of the annular groove 7a of the piston 7. The first and second lip portions 3d, 3e include first and second dents 3i, 3i respectively, at the circumferential side of the first and second shoulder portions 3g, 3g. The first and second dents 3i, 3i are slidably movable on the inner cylinder surface 4a and the outer cylinder surface 4b of the cylinder chamber 4. First and second straight portion 3k, 31 are provided at inner and outer circumferential surfaces of tip ends of the first and second lip portions 3d, 3e, respectively. The first and second straight portions 3k, 31 extend in the axial direction in a non-assembled condition.

The piston 7 includes the annular groove 7a, first and second jaw portions 7b, 7c, a projecting portion 7d and a tightening portion 7e. The neck portion 3b and the head portion3c are inserted into the annular groove 7a. The first and second jaw portions 7b, 7c are located at the open side of the annular groove 7a. The projecting portion 7d is formed at the second jaw portion 7c (located out side) and protrudes toward the annular groove 7a. The tightening portion 7e is disposed inside of the annular groove 7a and further inside of the projecting portion 7d. The tightening portion 7e compresses the outer peripheral surface of the head portion 3c which has been inserted into the annular groove 7a. An inner peripheral surface of the projecting portion 7d contacts with an outer surface of the neck portion 3b in the radial direction.

Referring to Fig. 3 and Fig. 4, the cup seal 3 makes close contact with the end surfaces 7i, 7i formed at the circumference of the annular groove 7a by means of the first and second recesses 3h, 3h when the head portion 3c is compressed by the tightening portion 7e. Thus, a leakage of the oil from between the cup seal 3 and the piston 7 can be prevented. Further, the first and second lip portions 3d, 3e of the cup seal 3 make close contact with the inner and outer cylinder surfaces 4a, 4b of the cylinder chamber 4, respectively, by means of the first and second dents 3i, 3i. Thus, the leakage of the oil from between the cup seal 3 and the inner and outer cylinder surfaces 4a, 4b can be prevented.

The contact condition between the cup seal 3 and the piston 7, and the contact condition between the cup seal 3 and the inner and outer cylinder surfaces 4a, 4b of the cylinder chamber 4 are stabilized by means of the first and second recesses 3h, 3h, and the first and second dents 3i, 3i. Therefore, these contact conditions contribute to the uniformity of the inner peripheral surface pressure generated between the inner peripheral surface of the cup seal 3 and the inner cylindrical surface 4a of the cylinder chamber 4, and the outer peripheral surface pressure generated between the outer peripheral surface of the cup seal 3 and the outer cylindrical surface 4b of the cylinder chamber 4.

Referring to Fig. 3 and Fig. 4, when the head portion 3c is compressed by the tightening portion 7e, the second jaw portion (outside jaw portion) 7c contacts with the neck portion 3b via the projecting portion 7d. On the other hand, a clearance 20 is formed between the first jaw portion (inside jaw portion) 7b and the neck portion 3b. Thus, the cup seal 3 is loosely engaged with the first and second jaw portions 7b, 7c which are disposed at an entrance of the annular groove 7a. Then, the cup seal 3 is connected to the piston 7 by means of the head portion 3c compressed by the tightening portion 7e which is disposed further inward of the first and second jaw portions 7b, 7c of the annular groove 7a. Furthermore, the positioning of the cup seal 3 is easily performed and twisting of the cup seal 3 is prevented because of the contacts between the projecting portion 7d and the neck portion 3b.

The cup seal 3 has few tightened portions, i.e., the cup seal 3 is tightened only by the tightening portion 7e. Accordingly, the tightening force applied to the cup seal 3 is stable comparing with the cup seal 3 which is tightened by several positions from the piston 7. Consequently, a deviation of the tightening force during the production can be reduced.

The cup seal 3 is generally made of elastic material such as an elastic rubber. The deviation of the size of the cup seal 3 becomes inevitably large in machining process comparing with the piston which is generally made of rigid material. This deviation of the size is larger when a shape of the cup seal 3 becomes complicated. If the cup seal 3 is compressed at an entrance and an inside of the annular groove 7a, the deviation of the tightening force applied to the cup seal 3 during the production increases because of the influence of the deviation of the size of the cup seal 3. That is, the tightening force is largely changed depending on a level of the first and second jaw portions 7b, 7c compressed against the neck portion 3b.

According to the embodiment, the position of the tightening portion 7e is limited to be provided at the inside of the annular groove 7a and accordingly, the deviation of the size of the cup seal 3 is reduced. An assembled structure in which the cup seal 3 is easy to be engaged with the piston 7 when assembling and is difficult to be disengaged from the piston 7 during the operation is achieved.

Next, the dimension of the cup seal according to the embodiment, the dimension of the sample materials 1, 2 of the cup seal according to the embodiment, as well as the measured contact surface pressure of the lip portion of the cup seal using the sample material 1 will be explained hereinafter.

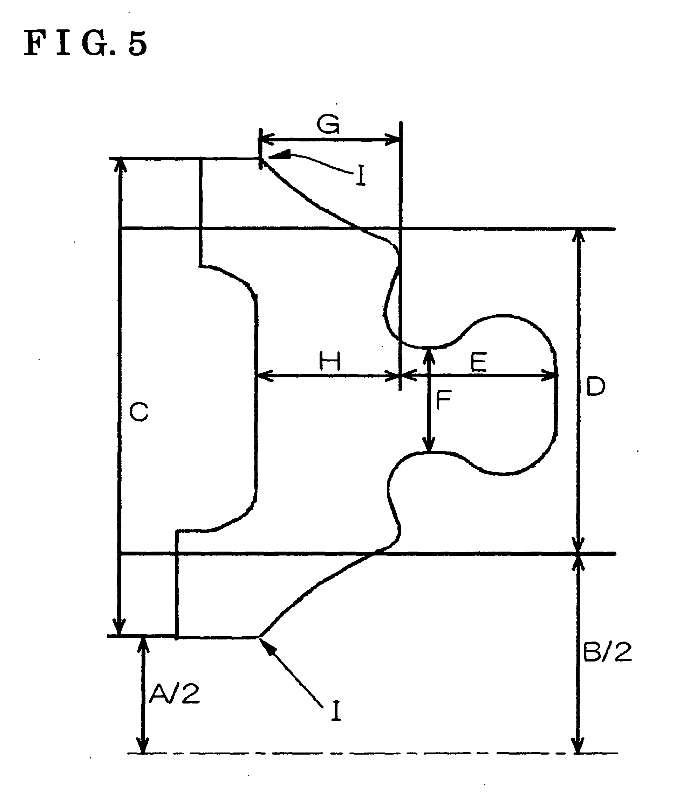

Referring to Fig. 2 and Fig. 5, the dimension of the cup seal according to the embodiment is determined below.
A: an inner diameter of the cup seal 3;
B: an outer diameter of the inner cylinder surface 4a of the cylinder chamber 4;
C: a cup width which is a radial distance between the inner peripheral surface and the outer peripheral surface of the first and second lip portions 3d, 3e;
D: a cylinder width which is a distance between the inner cylinder surface 4a and the outer cylinder surface 4b of the cylinder chamber 4;
E: a total axial length of the head portion 3c and the neck portion 3b;
F: a width in a radial direction of the neck portion 3c;
G: an axial length of a portion of each of the first and second lip portions 3d, 3e, radially and axially inclined (first and second dents 3i, 3i);
H: an axial length of the base portion 3a; and
I: a curvature of a portion 3j connecting each of the straight portions 3k, 31 and the portion of each of the first and second lip portions 3d, 3e radially and axially inclined (first and second dents 3i, 3i).

Dimensions of the sample material 1 of the cup seal:
A/B=0.94;
C/D=1.38;
E/F=1.45;
G/F=1; and
I=0.1 R

Dimensions of the sample material 2 of the cup seal:
A/B=0.93;
C/D=1.36;
E/F=1.45;
G/F=1; and
1=0.1R

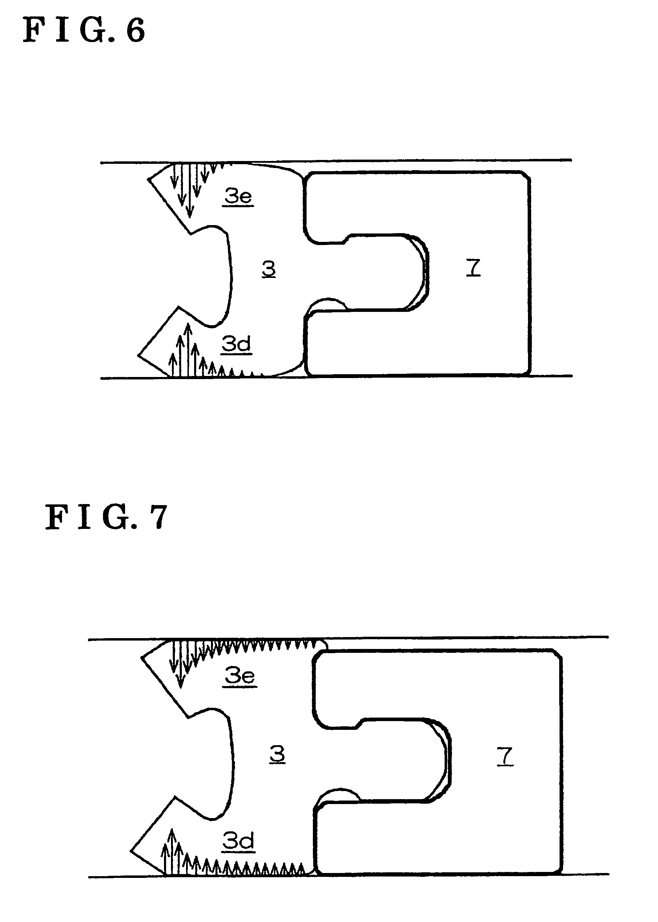

Fig. 6 is a distribution chart of a contact surface pressures of the lip portions of the cup seal when the cup seal is assembled i.e., no load is applied to the cup seal. Fig. 7 is a distribution chart of the contact pressures of the lip portions of the cup seal when a load is applied to the cup seal. The contact pressure is measured by using the cup seal according to the embodiment.

In Figs. 6 and 7, a length of each arrow shows a magnitude of the contact pressure (a reaction force). Further, an area surrounded by an envelope curve that is obtained by connecting tip ends of the arrows indicates a total contact pressure of the lip portions 3e, 3d. Referring to Figs. 2, 6 and 7, the inner peripheral surface pressure generated between the inner peripheral surface of the cup seal 3 and the inner cylindrical surface 4a of the cylinder chamber 4, and the outer peripheral surface pressure generated between the outer peripheral surface of the cup seal 3 and the outer cylindrical surface 4b of the cylinder chamber 4 are substantially the same whenever the cup seal 3 is assembled or load is applied to the cup seal 3. Furthermore, the inner peripheral surface pressure and the outer peripheral surface pressure both have distinct peaks. Thus, leakage of the oil is unlikely to occur from between the cup seal 3 and the inner and outer cylinder surfaces 4a, 4b of the cylinder chamber 4.

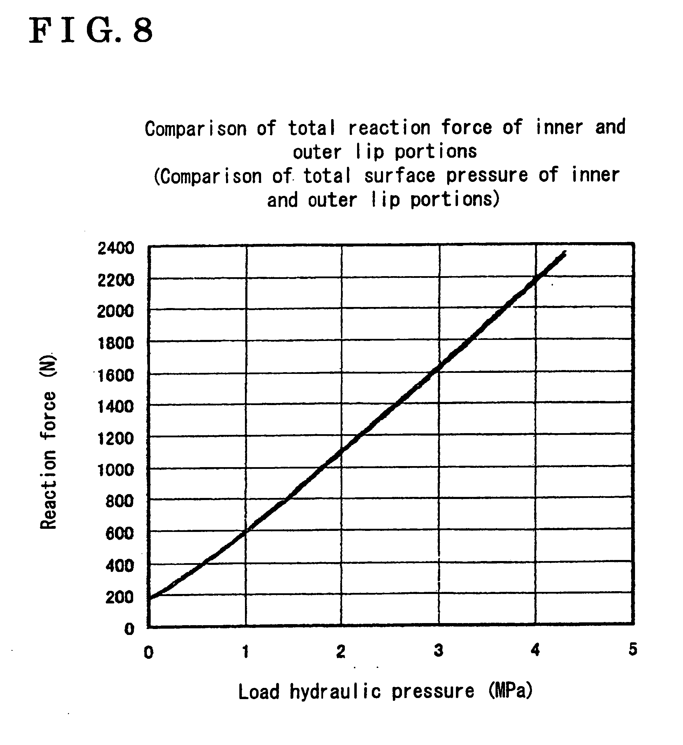

Fig. 8 is a comparison chart of the measured contact pressures of the first lip portion (inner lip portion) 3d and the second lip portion (outer lip portion) 3e. Referring to Fig. 2 and Fig. 8, the contact pressures (reaction forces) of the inner lip portion 3d and the outer lip portion 3e against the cylinder chamber 4 are substantially the same over a wide pressure range. Therefore, the shape of the cup seal 3 according to the embodiment highly ensures the uniformity of the inner peripheral surface pressure generated between the inner peripheral surface of the cup seal 3 and the inner cylindrical surface 4a of the cylinder chamber 4, and the outer peripheral surface pressure generated between the outer peripheral surface of the cup seal 3 and the outer cylindrical surface 4b of the cylinder chamber 4.

Next, shapes of other portions of the cup seal 3 and the piston 7 according to the embodiment will be explained.

Referring to Fig. 2, a wall surface 7f is formed straight along the axial direction of the piston 7 in a radial cross section. The wall surface 7f faces the projecting portion 7d at an inner surface of the annular groove 7a. Alternatively, the wall surface 7f is formed on the identical diameter along the axial direction of the piston 7 in a radial cross section. According to such structure, the head portion 3c is easily inserted to the annular groove 7a when assembling.

Referring to Fig. 2 and Fig. 3, the base of the annular groove 7a includes a linear portion 7g and first and second corner portions 7h, 7h. The linear portion 7g is linearly formed along the piston 7 in the radial direction. The first and second corner portions 7h, 7h are respectively formed into a curved surface shape at both ends of the linear portion 7g. According to the embodiment, even through the projecting portion 7d is formed at the opening portion of the annular groove 7a, cutting and processing of the annular groove 7a is easily performed.

Referring to Fig. 2 and Fig. 3, the head portion 3c includes first and second corner portions 3f, 3f which are respectively formed into a curved surface shape at both radial ends of an end portion of the head portion 3c. According to such structure, a contact area between the head portion 3c and the annular groove 7a increases to thereby enhance the tightening force against the cup seal 3.

Referring to Fig. 2, the ratio of a projecting length L2 of the projecting portion 7d along the radial direction to an opening diameter L1 of the annular groove 7a, i.e., L2/L1 (%), is desirably specified in a range from 5 to 20 %. The projecting length L2 is generally equal to or more than 0.1 mm.

According to the embodiment, a space 21 is provided between the apex of the head portion 3c and the base of the annular groove 7a.

The cup seal according to the embodiment is applied to the annular shaped cup seal which is engaged with the annular piston. Specifically, the cup seal according to the embodiment is applied to the hydraulic clutch release device which is mounted on the vehicle.

The cup seal according to the present embodiment is formed into a continuous and axially symmetrical shape, i.e., an annular shape. Alternatively, the cup seal may be formed into a discontinuous shape in a circumferential direction, i.e., the cup seal may be divided into multiple portions arranged at predetermined intervals in the circumferential direction.

## Claims

1. A cup seal (3) being connectable to an end portion of a piston (7) which has an annular shape and which is slidably movable within a cylinder chamber (4), the cup seal being slidable relative to an inner cylindrical surface (4a) and an outer cylindrical surface (4b) of the cylinder chamber (4) when the piston (7) slidably moves within the cylinder chamber (4), the cup seal having an annular shape and elasticity, comprising:
a base portion (3a);
a neck portion (3b) formed at one axial end of the base portion;
first and second shoulder portions (3g, 3g) formed at the base portion (3a) and positioned at both sides of the neck portion (3b) in a radial direction;
a head portion (3c) formed at one axial end of the neck portion (3b) and engaging with the piston (7); and
first and second lip portions (3d, 3e) formed at both radial ends of the base portion (3a) and being slidable relative to the inner cylindrical surface (4a) and the outer cylindrical surface (4b) of the cylinder chamber (4) respectively;
**characterized in that**
the base portion (3a) includes first and second recesses (3h, 3h) formed between the neck portion (3b) and the first and second shoulder portions (3g, 3g) respectively around the neck portion (3b), the first and second recesses being adapted for making contact with an end surface formed around an annular groove (7a) which is formed at an end portion of the piston (7) and with which the head portion (3c) engages.

2. The cup seal according to claim 1, wherein
the based portion (3a), the neck portion (3b), and the head portion (3c) each have an axially symmetrical shape,
the first and second lip portions (3d, 3e) have the same thickness, and
the first and second lip portions (3d, 3e) include first and second dents (3i, 3i) which are formed around the first and second shoulder portions (3g, 3g) respectively and which are slidable relative to the inner cylindrical surface (4a) and the outer cylindrical surface (4b) of the cylinder chamber (4).

3. The cup seal according to claim 1 or 2, wherein when defining
A: an inner diameter of the cup seal (3),
B: an outer diameter of the inner cylindrical surface (4a) of the cylinder chamber (4),
C: a cup width corresponding to a radial distance between an inner cylindrical surface (4a) and an outer cylindrical surface (4b) of the first and second lip portions (3d, 3e) respectively,
D: a cylinder width corresponding to a distance between the inner cylindrical surface (4a) and the outer cylindrical surface (4b) of the cylinder chamber (4),
E: a total axial length of the head portion (3c) and the neck portion (3b), and
F: a radial width of the neck portion (3b),
A/B is equal to or smaller than 0.95, C/D is equal to or greater than 1.30, and E/F is equal to or smaller than 1.5.

4. The cup seal according to claim 3, wherein A/B is in a range from 0.7 to 0.95, C/D is in a range from 1.30 to 1.6, and E/F is in a range from 1.2 to 1.5.

5. The cup seal according to one of claims 1 through 4, wherein when defining
G: an axial length of a portion of each of the first and second lip portions (3d, 3e) radially and axially inclined, and
H: an axial length of the base portion (3a),
G/H is equal to or smaller than 1.

6. The cup seal according to any one of claims 1 through 5, wherein an inner peripheral surface and an outer peripheral surface of end portions of the first and second lip portions (3d, 3e) respectively form first and second straight portions (3k, 31) which axially extend in a non-assembled state.

7. The cup seal according to claim 6, wherein when defining
I: a curvature of a portion (3j) connecting each of the straight portions (3k, 31) and the portion of each of the first and second lip portions (3d, 3e) radially and axially inclined,
I is equal to or smaller than 1.

8. The cup seal according to one of claims 1 through 7, wherein the first and second lip portions (3d, 3e) include the first and second shoulder portions (3g, 3g) respectively around the head portion (3c), and the first and second shoulder portions (3g, 3g) axially extend towards the head portion (3c) relative to the base portion (3a).

## Patentansprüche

1. Topfdichtung (3), die mit einem Endbereich eines Kolbens (7), der eine Ringform aufweist und in einer Zylinderkammer (4) gleitend bewegbar ist, verbindbar ist, wobei die Topfdichtung zu einer inneren zylindrischen Fläche (4a) und einer äußeren zylindrischen Fläche (4b) der Zylinderkammer (4) relativ verschiebbar ist, wenn sich der Kolben (7) in der Zylinderkammer (4) gleitend bewegt, wobei die Topfdichtung eine Ringform und eine Elastizität aufweist, enthaltend:
einen Basisbereich (3a);
einen Halsbereich (3b), der an einem axialen Ende des Basisbereichs ausgebildet ist;
einen ersten und einen zweiten Schulterbereich (3g, 3g), die an dem Basisbereich (3a) ausgebildet sind und an beiden Seiten des Halsbereichs (3b) in einer radialen Richtung angeordnet sind;
einen Kopfbereich (3c), der an einem axialen Ende des Halsbereichs (3b) ausgebildet ist und in den Kolben (7) eingreift; und
einen ersten und einen zweiten Lippenbereich (3d, 3e), die an beiden radialen Enden des Basisbereichs (3a) ausgebildet sind und zu der inneren zylindrischen Fläche (4a) bzw. der äußeren zylindrischen Fläche (4b) der Zylinderkammer (4) relativ verschiebbar sind;
**dadurch gekennzeichnet, dass**
der Basisbereich (3a) eine erste und eine zweite Aussparung (3h, 3h) aufweist, die zwischen dem Halsbereich (3b) bzw. dem ersten und zweiten Schulterbereich (3g, 3g) um den Halsbereich (3b) herum ausgebildet sind, wobei die erste und die zweite Aussparung angepasst sind, mit einer Stirnfläche in Kontakt zu gelangen, die um eine ringförmige Nut (7a), die an einem Endbereich des Kolbens (7) ausgebildet ist und in die der Kopfbereich (3c) eingreift, herum ausgebildet ist.

2. Topfdichtung nach Anspruch 1, wobei
der Basisbereich (3a), der Halsbereich (3b) und der Kopfbereich (3c) jeweils eine axiale symmetrische Form aufweisen,
der erste und der zweite Lippenbereich (3d, 3e) dieselbe Dicke aufweisen, und
der erste und der zweite Lippenbereich (3d, 3e) erste und zweite Zähne (3i, 3i) aufweisen, die um den ersten bzw. den zweiten Schulterbereich (3g, 3g) herum ausgebildet sind und die zu der inneren zylindrischen Fläche (4a) und der äußeren zylindrischen Fläche (4b) der Zylinderkammer (4) relativ verschiebbar sind.

3. Topfdichtung nach Anspruch 1 oder 2, wobei, wenn
A: einen inneren Durchmesser der Topfdichtung (3),
B: einen äußeren Durchmesser der inneren zylindrischen Fläche (4a) der Zylinderkammer (4),
C: eine Topfbreite, die einem radialen Abstand zwischen einer inneren zylindrischen Fläche (4a) und einer äußeren zylindrischen Fläche (4b) des ersten bzw. des zweiten Lippenbereichs (3d, 3e) entspricht,
D: eine Zylinderbreite, die einem Abstand zwischen der inneren zylindrischen Fläche (4a) und der äußeren zylindrischen Fläche (4b) der Zylinderkammer (4) entspricht,
E: eine axiale Gesamtlänge des Kopfbereichs (3c) und des Halsbereichs (3b), und
F: eine radiale Breite des Halsbereichs (3b) definiert,
A/B gleich oder kleiner als 0,95, C/D gleich oder kleiner als 1,30 und E/F gleich oder kleiner als 1,5 ist.

4. Topfdichtung nach Anspruch 3, wobei A/B in einem Bereich von 0,7 bis 0,95, C/D in einem Bereich von 1,30 bis 1,6 und E/F in einem Bereich von 1,2 bis 1,5 liegt.

5. Topfdichtung nach einem der Ansprüche 1 bis 4, wobei, wenn
G: eine axiale Länge eines Bereichs jedes ersten und zweiten Lippenbereichs (3d, 3e), der radial und axial geneigt ist, und
H: eine axiale Länge des Basisbereichs (3a) definiert,
G/H gleich oder kleiner als 1 ist.

6. Topfdichtung nach einem der Ansprüche 1 bis 5, wobei eine innere Umfangsfläche und eine äußere Umfangsfläche von Endbereichen des ersten bzw. zweiten Lippenbereichs (3d, 3e) einen ersten und einen zweiten geraden Bereich (3k, 31) bilden, die sich in einem nicht zusammengebauten Zustand axial erstrecken.

7. Topfdichtung nach Anspruch 6, wobei, wenn
I: eine Krümmung eines Bereichs (3j) definiert, der jeden der geraden Bereiche (3k, 31) und den Bereich jedes ersten und zweiten Lippenbereichs (3d, 3e), der radial und axial geneigt ist, verbindet, I gleich oder kleiner als 1 ist.

8. Topfdichtung nach einem der Ansprüche 1 bis 7, wobei der erste und der zweite Lippenbereich (3d, 3e) den ersten bzw. zweiten Schulterbereich (3g, 3g) um den Kopfbereich (3c) herum aufweisen, und der erste und der zweite Schulterbereich (3g, 3g) sich axial in Richtung des Kopfbereichs (3c) relativ zu dem Basisbereich (3a) erstreckt.

## Revendications

1. Joint calotte (3) pouvant être connecté à une partie d'extrémité d'un piston (7) qui est de forme annulaire et qui est mobile de façon coulissante à l'intérieur d'une chambre de cylindre (4), le joint calotte pouvant coulisser par rapport à une surface cylindrique intérieure (4a) et une surface cylindrique extérieure (4b) de la chambre de cylindre (4) lorsque le piston (7) se déplace de façon coulissante à l'intérieur de la chambre de cylindre (4), le joint calotte présentant une forme annulaire et une élasticité, comprenant:
une partie de base (3a);
une partie de col (3b) formée à une extrémité axiale de la partie de base;
des première et deuxième parties d'épaulement (3g, 3g) formées à la partie de base (3a) et positionnées aux deux côtés de la partie de col (3b) dans une direction radiale;
une partie de tête (3c) formée à une extrémité axiale de la partie de col (3b) et qui s'engage avec le piston (7); et
des première et deuxième parties de lèvre (3d, 3e) formées aux deux extrémités radiales de la partie de base (3a) et pouvant coulisser par rapport à la surface cylindrique intérieure (4a) et à la surface cylindrique extérieure (4b) de la chambre de cylindre (4), respectivement;
**caractérisé en ce que**:
la partie de base (3a) comporte des premier et deuxième évidements (3h, 3h), respectivement, formés entre la partie de col (3b) et les première et deuxième parties d'épaulement (3g, 3g), respectivement, autour de la partie de col (3b), les premier et deuxième évidements étant adaptés pour entrer en contact avec une surface d'extrémité formée autour d'une rainure annulaire (7a) qui est formée à une partie d'extrémité du piston (7) et avec laquelle la partie de tête (3c) s'engage.

2. Joint calotte selon la revendication 1, dans lequel:
la partie de base (3a), la partie de col (3b) et la partie de tête (3c) présentent chacune une forme axialement symétrique;
les première et deuxième parties de lèvre (3d, 3e) ont la même épaisseur; et
les première et deuxième parties de lèvre (3d, 3e) présentent des premier et deuxième enfoncements (3i, 3i) qui sont formés autour des première et deuxième parties d'épaulement (3g, 3g), respectivement, et qui peuvent coulisser par rapport à la surface cylindrique intérieure (4a) et à la surface cylindrique extérieure (4b) de la chambre de cylindre (4).

3. Joint calotte selon la revendication 1 ou 2, dans lequel, lorsque l'on définit:
A = un diamètre intérieur du joint calotte (3),
B = un diamètre extérieur de la surface cylindrique intérieure (4a) de la chambre de cylindre (4),
C = une largeur de calotte qui correspond à une distance radiale entre une surface cylindrique intérieure (4a) et une surface cylindrique extérieure (4b) des première et deuxième parties de lèvre (3d, 3e), respectivement,
D = une largeur de cylindre qui correspond à une distance entre la surface cylindrique intérieure (4a) et la surface cylindrique extérieure (4b) de la chambre de cylindre (4),
E = une longueur axiale totale de la partie de tête (3c) et de la partie de col (3b), et
F = une largeur radiale de la partie de col (3b),
A/B est égal ou inférieur à 0,95, C/D est égal ou supérieur à 1,30, et E/F est égal ou inférieur à 1,5.

4. Joint calotte selon la revendication 3, dans lequel A/B est compris dans une gamme de 0,7 à 0,95, C/D est compris dans une gamme de 1,30 à 1,6, et E/F est compris dans une gamme de 1,2 à 1,5.

5. Joint calotte selon l'une quelconque des revendications 1 à 4, dans lequel, lorsque l'on définit:
G = une longueur axiale d'une partie de chacune des première et deuxième parties de lèvre (3d, 3e) inclinée radialement et axialement, et
H = une longueur axiale de la partie de base (3a),
G/H est égal ou inférieur à 1.

6. Joint calotte selon l'une quelconque des revendications 1 à 5, dans lequel une surface périphérique intérieure et une surface périphérique extérieure des parties d'extrémité des première et deuxième parties de lèvre (3d, 3e), respectivement, forment des première et deuxième parties droites (3k, 31) qui s'étendent axialement dans un état non assemblé.

7. Joint calotte selon la revendication 6, dans lequel, lorsque l'on définit:
I = une courbure d'une partie (3j) qui relie chacune des parties droites (3k,31) et la partie de chacune des première et deuxième parties de lèvre (3d, 3e) radialement et axialement inclinée,
I est égal ou inférieur à 1.

8. Joint calotte selon l'une quelconque des revendications 1 à 7, dans lequel les première et deuxième parties de lèvre (3d, 3e) comprennent les première et deuxième parties d'épaulement (3g, 3g), respectivement, autour de la partie de tête (3c), et les première et deuxième parties d'épaulement (3g, 3g) s'étendent axialement en direction de la partie de tête (3c) par rapport à la partie de base (3a).
